# DEMANDE DE BREVET EUROPEEN

(11) **EP 1 739 817 A1**
(43) Date de publication de la demande: **03.01.2007**
(21) Numéro de dépôt: 05105890.7
(22) Date de dépôt: 30.06.2005
(51) Int. Cl.: H02M 3/338, H02M 3/335, H01F 38/14

(54) **Dispositif chargeur pour la transmission d'énergie électrique avec un objet portable**

(71) Demandeur: ETA SA Manufacture Horlogère Suisse, 2540 Grenchen (CH)
(72) Inventeur: BIELER, Thierry, 1110, Morges (CH)
(74) Mandataire: Vigand, Philippe

(57) **Abrégé**

Le dispositif du type chargeur (1) permet une transmission d'énergie électrique sans contact électrique par couplage inductif avec un objet portable, tel qu'une montre-bracelet (2). Cette montre (2) est munie d'une source d'énergie rechargeable (12) reliée à un circuit de commande de charge électrique (11). Le dispositif comprend un convertisseur (3) de courant continu en courant alternatif, qui est destiné à être alimenté par une tension continue déterminée, pour générer des signaux alternatifs de courant dans une première inductance (L1) agissant comme une bobine primaire d'un transformateur. Cette bobine primaire est susceptible d'être couplée de manière inductive avec une seconde inductance (L2) agissant comme une bobine secondaire du transformateur de la montre pour le transfert d'énergie. Cette seconde inductance (L2) est reliée au circuit de commande de charge (11) de la montre (2) notamment par l'intermédiaire d'un condensateur d'accordage (C2). Le dispositif (1) comprend des moyens de mesure (R_{S},5) du courant continu moyen (I_{DC}) consommé notamment par le convertisseur (3) pour déterminer, par rapport à au moins un premier niveau seuil de courant moyen, un état du secondaire de l'objet portable (2).

## Description

La présente invention concerne un dispositif du type chargeur pour la transmission d'énergie électrique sans contact électrique avec un objet portable, tel qu'une montre-bracelet. Le dispositif comprend un convertisseur de courant continu en courant alternatif, qui est destiné à être alimenté par une tension continue déterminée, pour générer des signaux alternatifs de courant dans une première inductance agissant comme une bobine primaire d'un transformateur. Cette première inductance est susceptible d'être couplée de manière inductive avec une seconde inductance agissant comme une bobine secondaire du transformateur de l'objet portable, quand l'enroulement de l'inductance secondaire se trouve à proximité de l'enroulement de l'inductance primaire.

Il est à noter que par transmission d'énergie entre le dispositif chargeur et l'objet portable, il faut comprendre aussi bien une opération de charge d'une source d'énergie de l'objet portable, qu'une opération de transmission d'informations. Ces deux opérations peuvent bien entendu être combinées. Lorsqu'il est nécessaire de transmettre des données en plus de l'opération de charge proprement dite, les données peuvent être transmises du dispositif à l'objet ou inversement.

L'objet portable peut être de préférence une montre-bracelet, mais également un téléphone portable, une carte à puce, un simple transpondeur par exemple ou tout autre instrument de taille réduite muni par exemple d'une source d'énergie rechargeable. Il peut comprendre différents moyens électroniques pour offrir plusieurs fonctions à son utilisateur. La source d'énergie électrique, qu'il comprend, est ainsi susceptible d'alimenter tous les composants électroniques. Cette source d'énergie électrique utilisée est généralement une pile ou batterie, ou un accumulateur d'énergie. Dans ce dernier cas, il est nécessaire lorsque le niveau de tension de l'accumulateur devient insuffisant d'opérer une charge électrique de l'accumulateur notamment à l'aide d'un transformateur par couplage magnétique.

Le dispositif chargeur peut être en mesure de déterminer un état du secondaire de l'objet portable afin de débuter par exemple une opération de charge d'une source d'énergie de l'objet portable, quand il est par exemple posé dans un logement du dispositif prévu à cet effet.

Plusieurs solutions ont déjà été proposées par le passé pour permettre au dispositif chargeur de charger la source d'énergie de l'objet, après détection de la présence notamment du secondaire de l'objet à proximité du primaire du dispositif chargeur. Pour ce faire, il est connu d'utiliser des éléments mécaniques de commutation, qui sont pressés par l'objet portable lorsqu'il est introduit dans un logement ou placé sur une surface du dispositif en position de charge. Il est également connu de détecter la présence de l'objet dans le logement ou sur ladite surface du dispositif à l'aide de composants optiques ou électriques indépendants des éléments du dispositif agissant lors de l'opération de charge.

Comme tous ces composants ou éléments de détection de l'objet doivent être prévus en plus des éléments propres à l'opération de charge de la source d'énergie de l'objet portable, cela complique la réalisation d'un tel dispositif chargeur.

L'invention a donc pour but principal de pallier les inconvénients cités ci-dessus en réalisant un dispositif chargeur susceptible de déterminer facilement l'état du secondaire de l'objet portable en réduisant au maximum le nombre de composants nécessaires à cette détermination.

A cet effet, l'invention concerne un dispositif du type chargeur cité ci-devant qui se caractérise en ce qu'il comprend des moyens de mesure du courant continu moyen consommé notamment par le convertisseur pour déterminer, par rapport à au moins un premier niveau seuil de courant moyen, un état du secondaire de l'objet portable.

Un avantage du dispositif chargeur selon l'invention réside dans le fait que par la mesure de la puissance moyenne consommée, notamment du courant continu moyen, il est facile de déterminer l'état du secondaire de l'objet portable. Le dispositif chargeur est donc en mesure de déterminer la présence ou l'absence de l'objet portable à proximité du dispositif chargeur. Il est également en mesure de déterminer un état de décharge profonde au niveau du secondaire de l'objet portable, un état de charge de la source d'énergie de l'objet portable, ou un état de fin de charge de ladite source d'énergie.

Grâce à la mesure facile du courant continu moyen, cela évite de devoir effectuer une mesure directement du courant alternatif dans la bobine du primaire qui est relativement complexe et coûteuse en composants.

De préférence pour la mesure du courant continu moyen consommé au niveau du primaire, une résistance de mesure est placée en série avec le convertisseur du courant continu en courant alternatif entre deux bornes d'alimentation électrique d'une source de tension continue. Comme la résistance de mesure est placée en série avec le convertisseur, il peut être prévu un filtre passe-bas connecté en parallèle avec ladite résistance pour filtrer les fluctuations du courant moyen à mesurer.

De préférence, un contrôleur compare le niveau du courant moyen filtré, qui est consommé dans le primaire et converti en une tension continue, à plusieurs seuils de tension afin de déterminer l'état du secondaire.

Les buts, avantages et caractéristiques du dispositif chargeur pour la transmission d'énergie électrique à un objet portable apparaîtront mieux dans la description suivante d'au moins un mode de réalisation de l'invention en liaison avec les dessins dans lesquels :
- la figure 1 représente schématiquement les différents composants électroniques du dispositif chargeur selon l'invention et de l'objet portable pour la transmission d'énergie électrique,
- la figure 2 représente une partie du convertisseur de courant continu en courant alternatif et des moyens de mesure du courant continu moyen du dispositif chargeur selon l'invention, et
- la figure 3 représente deux graphiques du courant continu moyen mesuré au niveau du primaire et du courant de charge au niveau du secondaire en fonction du temps selon plusieurs états du secondaire.

Dans la description suivante d'un mode préféré de réalisation du dispositif du type chargeur, tous les éléments qui composent le dispositif, qui sont bien connus d'un homme du métier dans ce domaine technique, seront expliqués de manière simplifiée. De préférence, le dispositif chargeur permet de réaliser par couplage inductif la charge ou recharge d'une source d'énergie d'un objet portable, tel qu'une montre-bracelet, quand l'objet est posé sur une surface ou dans un logement correspondant du dispositif. De ce fait, il ne sera fait référence dans la suite de la description uniquement à une montre-bracelet en tant qu'objet portable.

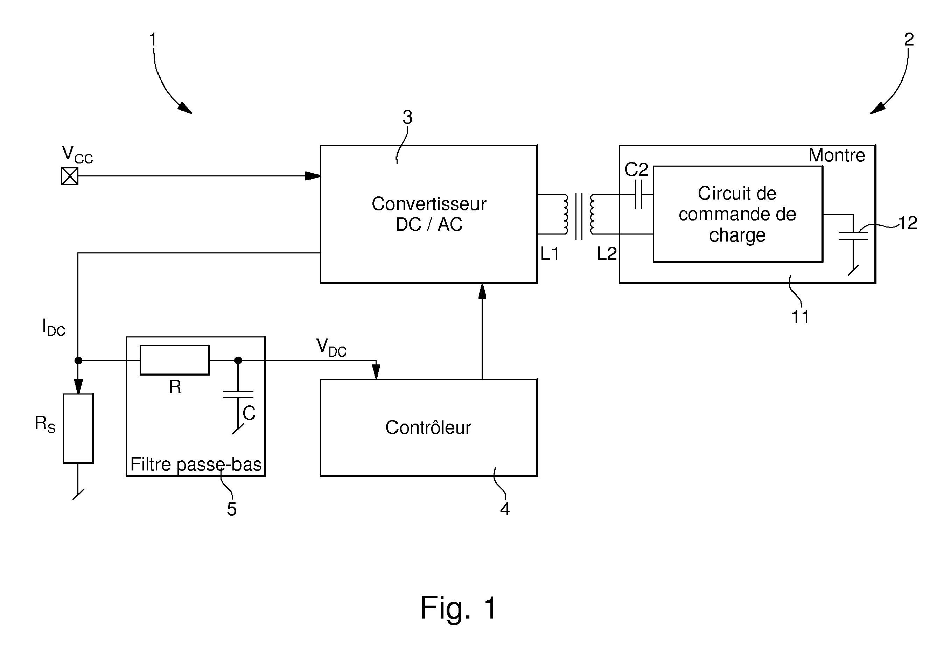

La figure 1 représente les différents composants électroniques d'un dispositif chargeur 1 pour la transmission d'énergie électrique par couplage inductif avec une montre-bracelet 2 à proximité du dispositif chargeur ou en contact mécanique avec le dispositif. Le dispositif chargeur en tant que primaire permet de déterminer l'état de la montre-bracelet 2 en tant que secondaire. L'état du secondaire déterminé par le dispositif concerne la présence ou l'absence de la montre, un état de décharge profonde, un état à faible consommation, un état de charge d'une source d'énergie de la montre et un état de fin de charge.

Le dispositif chargeur 1 comprend principalement un convertisseur de courant continu en courant alternatif 3, un contrôleur 4 pour la commande du convertisseur 3 et des moyens de mesure du courant continu moyen consommé R_{S}, 5 pour la détermination de l'état du secondaire. Le dispositif chargeur 1 est alimenté par une tension continue V_{CC}, qui peut être de quelques Volts à plus de 400 V, par exemple égale à 16.9 V. Ceci permet par la mesure du courant continu moyen de calculer facilement la puissance moyenne consommée par le primaire, étant donné que le dispositif est alimenté par une tension continue fixe.

Pour le couplage inductif avec la montre-bracelet, le dispositif comprend un premier enroulement ou première inductance L1 connecté au convertisseur 3. Cette première inductance L1 définit une bobine primaire d'un transformateur, qui est parcourue par un courant alternatif généré par le convertisseur en mode de fonctionnement du dispositif. Cette inductance L1, qui peut comprendre 40 spires (60 µH), peut être ou non montée sur un support magnétique, par exemple en ferrite. Le courant alternatif dans l'inductance L1 a une fréquence déterminée située entre 100 kHz et 4 MHz, de préférence égale à 150 kHz ou 300 kHz, qui est déterminée par un étage oscillateur du contrôleur 4.

La montre-bracelet 2 comprend en plus des éléments de la fonction horaire non représentés, un circuit de commande de charge 11 relié d'un côté à une source d'énergie rechargeable 12, et de l'autre côté à un second enroulement ou seconde inductance L2 définissant une bobine secondaire du transformateur. Un condensateur d'accordage C2, par exemple de valeur égale à 33 nF, peut être relié en série entre la bobine L2 et le circuit de commande de charge afin d'améliorer le rendement du transformateur. Le circuit de commande de charge peut comprendre un étage redresseur composé d'au moins une diode en série avec la bobine L2 et le condensateur C2.

La seconde inductance ou l'enroulement L2 de la montre, qui peut comprendre 50 spires (80 µH), peut se trouver soit dans une branche du bracelet, soit dans le boîtier non métallique de la montre enroulé autour d'un noyau ferromagnétique par exemple. Dans le premier cas, il est réalisé sous forme d'une spirale métallique sur un circuit imprimé flexible double face. Ce circuit imprimé est enfermé dans un enrobage caoutchouteux du bracelet par exemple en étant relié au circuit de charge par deux connexions métalliques à travers le boîtier de la montre.

Comme le rendement du couplage inductif entre la bobine primaire L1 et la bobine secondaire L2 de la montre est proche de 50% en général, il est nécessaire d'avoir un courant de l'ordre de 300 mA dans la bobine primaire pour pouvoir assurer au moins un courant de charge de l'ordre de 150 mA dans le secondaire. Les courants primaire et secondaire sont dépendants totalement de la tension d'alimentation du primaire et de la tension désirée au secondaire.

Lorsque la bobine secondaire de la montre est placée à proximité de la bobine primaire du dispositif chargeur, une opération de charge ou de recharge de la source d'énergie de la montre peut être effectuée sans fil par couplage inductif. Cette source d'énergie peut de préférence être un accumulateur Lithium-ion délivrant en pleine charge par exemple une tension continue voisine de 4.2 V. Pour effectuer une charge optimale, les deux enroulements L1 et L2 doivent si possible être bien alignés.

Grâce aux moyens de mesure du courant continu moyen I_{DC}, le dispositif chargeur avec le contrôleur 4 est en mesure de déterminer l'état du secondaire du transformateur. Il est possible par exemple de déterminer facilement la présence ou l'absence de la montre, ou un état de charge ou de fin de charge de l'accumulateur de la montre.

Les moyens de mesure du courant continu moyen I_{DC} sont composés principalement d'une résistance de mesure R_{S}, qui est reliée en série avec le convertisseur 3 entre deux bornes d'alimentation d'une source de tension continue non représentée. La valeur du courant moyen traversant cette résistance de mesure est dépendante de l'impédance vue du côté du primaire. En fonction de la présence ou de l'absence de la montre constituant le secondaire, le courant actif consommé au primaire varie. De ce fait, il est possible de déterminer par exemple la présence ou l'absence de ladite montre par la modification de l'inductance propre reflétée notamment par l'inductance mutuelle.

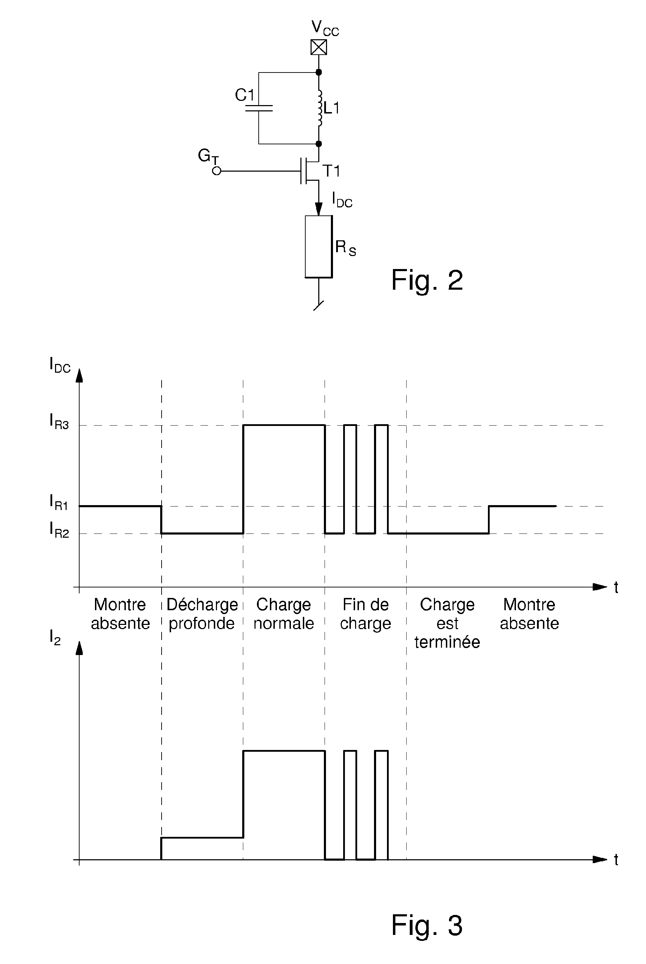

Comme montré à la figure 2, la résistance de mesure R_{S} est reliée entre la masse et la source d'un transistor de commande T1 de type MOS. Le drain de ce transistor est relié à un circuit résonnant composé de la première inductance L1 et d'un condensateur d'accordage C1 en parallèle, par exemple de valeur égale à 22 nF. Le circuit résonnant est connecté à la borne d'alimentation V_{CC} de la source d'alimentation en tension continue. Le convertisseur 3 comprend donc un montage du type fly-back.

Le transistor T1 est commandé par un signal de commande à fréquence fixe ou variable, qui est appliqué sur sa grille G_{T}. La fréquence fixe est déterminée sur la base de la constante de temps définie par la valeur de l'inductance L1 et de la capacité C1, par exemple voisine de 150 kHz. Ce signal de commande est un signal à modulation de largeur d'impulsions (PWM).

Le rapport cyclique (duty-cycle) d'enclenchement du transistor de commande T1 du résonateur qui comprend la bobine du primaire L1 peut être de l'ordre de 33%. Ceci signifie que sur une période temporelle T, la durée de l'impulsion de commande sur la grille G_{T} du transistor T1 vaut T/3. Par des impulsions rectangulaires de tension sur la grille du transistor de commande, un courant de forme sensiblement sinusoïdale est généré à une fréquence fonction de la fréquence du signal de commande. De plus, l'amplitude d'oscillation dans l'inductance L1 dépend également du rapport cyclique de manière à permettre de moduler la courant de charge dans le secondaire.

Etant donné que la résistance de mesure R_{S} est reliée directement à la source du transistor de commande T1, le courant I_{DC} la traversant comprend une oscillation due au circuit résonnant qu'il est nécessaire de filtrer. Pour ce faire, un filtre passe-bas 5 est monté en parallèle à la résistance R_{S}, comme montré à la figure 1. Ce filtre passe-bas est dimensionné pour filtrer toutes les oscillations de courant afin de fournir une tension de mesure continue V_{DC} au contrôleur 4. Cette tension de mesure continue représente l'image du courant continu moyen consommé par le primaire.

Le filtre passe-bas 5 peut n'être constitué que d'une résistance R, par exemple de valeur égale à 1 kΩ, et d'un condensateur C, par exemple de valeur égale à 33 nF. Toutefois, comme la résistance de mesure R_{S}, a une valeur inférieure à 1 Ω, par exemple égale à 0.5 Ω, un amplificateur du courant continu moyen de mesure, non représenté, est disposé entre la résistance de mesure R_{S} et le filtre passe-bas 5. L'amplificateur peut amplifier par un facteur de 50 ajustable la tension aux bornes de la résistance de mesure.

De manière à déterminer l'état du secondaire notamment la présence ou l'absence de la montre, la valeur du courant continu moyen consommé doit être comparée à au moins un seuil de courant de référence. Cette comparaison est effectuée dans le contrôleur 4 à l'aide de la tension continue de mesure V_{DC} par rapport à au moins un seuil de tension de référence, qui est l'image du seuil de courant de référence.

Normalement par économie d'énergie, le dispositif chargeur opère des tests de présence ou d'absence de montre en alimentant la bobine primaire pendant 25 périodes (< 1 ms, par exemple 166 us) toutes les 100 ms. En cas d'absence de la montre, il est nécessaire d'éviter d'alimenter inutilement le dispositif chargeur 1 pour la transmission d'énergie par le primaire.

En référence à la figure 3, il est expliqué les différents états du secondaire, qui sont déterminés par le niveau du courant continu moyen consommé dans le primaire et mesuré par l'intermédiaire de la résistance de mesure. Bien entendu, la durée de chaque état est représentée sur ces graphiques de manière purement arbitraire, ainsi que l'ordre d'apparition de chacun de ces états. Par contre, plusieurs niveaux I_{R1}, I_{R2}, I_{R3} du courant continu moyen filtré I_{DC} illustrent bien les états à déterminer du secondaire.

Le dispositif est en mesure de détecter différentes situations ou états qui sont la présence ou l'absence de la montre-bracelet, la montre ne consommant rien, la montre en décharge profonde, la montre avec un courant de charge limité par le transformateur, la montre qui maintient un courant de fin de charge.

Normalement, le fait d'approcher la bobine secondaire de la bobine primaire a pour conséquence que l'inductance propre vue depuis le primaire augmente, si le secondaire consomme peu d'énergie ou est en décharge profonde. Par augmentation de l'inductance propre dépendant de l'inductance mutuelle, le courant continu moyen consommé diminue comme montré par le niveau I_{R2}. Cependant lorsque le circuit de charge dans la montre en fonction est en phase de charge de l'accumulateur, le courant continu moyen augmente comme montré par le niveau I_{R3}.

Au terme de la phase de charge normale de l'accumulateur, le circuit de commande de charge dans la montre peut cycliquement couper le courant de charge rectifié I₂, donc la puissance au niveau du secondaire afin de signaler un état de fin de charge. Par cette opération, le dispositif chargeur est en mesure de déterminer à l'aide du contrôleur sur la base de la mesure du courant continu moyen, cet état de fin de charge, qui est suivi par une phase définissant que la charge est terminée, mais que la montre est toujours dans un état présent. En éloignant la montre du dispositif chargeur, le courant continu moyen remonte à une valeur de I_{R1} étant donné que l'inductance propre vue du côté du primaire diminue.

Pour la détermination des états indiqués ci-dessus, le contrôleur est en mesure d'effectuer une comparaison du niveau de la tension continue de mesure par rapport à plusieurs niveaux seuils de tension. Comme il est indiqué trois niveaux de courant continu moyen I_{R1}, I_{R2}, I_{R3}, il suffit de comparer la tension continue de mesure, qui est l'image du courant continu moyen consommé, par rapport à deux seuils de tension de référence intermédiaires à ces trois niveaux.

L'état en fin de charge peut être signalé également par une baisse progressive du courant de charge I₂, qui est détecté par le primaire à l'aide de la résistance de mesure.

Bien entendu, en plus des opérations de charge de l'accumulateur de la montre et de détermination des états du secondaire, il peut être prévu de transmettre également des informations du dispositif à la montre ou inversement. Une transmission de données du dispositif à la montre peut être effectuée par une modulation d'amplitude du courant de charge. La transmission de données de la montre au dispositif chargeur peut être réalisée par une coupure d'alimentation selon le principe défini par la terminologie anglaise ON-OFF keying.

A partir de la description qui vient d'être faite de multiples variantes de réalisation du dispositif chargeur peuvent être conçues par l'homme du métier sans sortir du cadre de l'invention définie par les revendications. Il peut être prévu notamment d'inverser le branchement série de la résistance de mesure et du convertisseur entre les deux bornes d'alimentation d'une source de tension continue.

## Revendications

1. Dispositif du type chargeur (1) pour la transmission d'énergie électrique sans contact électrique avec un objet portable, tel qu'une montre-bracelet, qui est muni d'une source d'énergie reliée à un circuit de commande de charge électrique (11), le dispositif comprenant un convertisseur (3) de courant continu en courant alternatif, qui est destiné à être alimenté par une tension continue déterminée, pour générer des signaux alternatifs de courant dans une première inductance (L1) agissant comme une bobine primaire d'un transformateur susceptible d'être couplée de manière inductive avec une seconde inductance (L2) agissant comme une bobine secondaire du transformateur, qui est reliée au circuit de commande de charge de l'objet portable, quand l'enroulement de l'inductance secondaire se trouve à proximité de l'enroulement de l'inductance primaire, **caractérisé en ce que** le dispositif comprend des moyens de mesure (R_{S}, 5) du courant continu moyen (I_{DC}) consommé notamment par le convertisseur pour déterminer, par rapport à au moins un premier niveau seuil de courant moyen, un état du secondaire de l'objet portable.

2. Dispositif selon la revendication 1, **caractérisé en ce que** les moyens de mesure comprennent une résistance de mesure (R_{S}) reliée en série avec le convertisseur entre deux bornes d'une source d'alimentation en tension continue, la résistance de mesure étant traversée par le courant continu moyen dans un mode de fonctionnement du dispositif.

3. Dispositif selon la revendication 2, **caractérisé en ce que** les moyens de mesure comprennent également un filtre passe-bas (5) connecté en parallèle avec la résistance de mesure afin de fournir à un contrôleur (4) une valeur de tension continue filtrée correspondant au courant continu moyen.

4. Dispositif selon la revendication 3, **caractérisé en ce que** le contrôleur permet de fournir une indication relative à l'état du secondaire sur la base de la valeur de tension continue filtrée comparée à plusieurs niveaux seuils de tension de manière à déterminer la présence ou l'absence de l'objet portable, une opération de charge de la source d'énergie de l'objet portable ou une opération de fin de charge de la source d'énergie de l'objet portable à proximité du dispositif.
